# FASCICULE DE BREVET EUROPEEN

(11) **EP 0 370 874 B1**
(45) Date de publication et mention de la délivrance du brevet: **14.07.1993**
(21) Numéro de dépôt: 89403162.4
(22) Date de dépôt: 17.11.1989
(51) Int. Cl.: F17D 1/00, G01F 1/76, G01G 11/14

(54) **Méthode et dispositif de pompage d'un fluide pétrolier**
Verfahren und Vorrichtung zum Pumpen eines Erdölfluidums
Method and apparatus for pumping a petroleum fluid

(30) Priorité: 23.11.1988 FR 8815237
(43) Date de publication de la demande: 30.05.1990
(73) Titulaire: INSTITUT FRANCAIS DU PETROLE, 92502 Rueil-Malmaison (FR)
(72) Inventeur: Castel, Yvon, F-78290 Croissy sur Seine (FR)
(74) Mandataire: Andreeff, François

(56) Documents cités:
- DE-A- 2 913 491
- DE-A- 3 007 855
- FR-A- 2 417 057
- FR-A- 2 557 643
- MEASUREMENT AND CONTROL, vol. 17, no. 3, mars 1984, pages 99-106; R.S. MEDLOCK: "Sensors for mechanical properties"

## Description

L'invention concerne un dispositif et une méthode de pompage d'un fluide, circulant dans une conduite, et comportant une quantité de gaz et une quantité de liquide.

L'invention s'applique, en particulier, à la production d'hydrocarbures comprenant un mélange gaz-liquide, cette production pouvant notamment, mais non exclusivement, être réalisée dans un environnement d'accès difficile, par exemple au niveau d'une tête de puits ou d'une ligne de transfert sous-marine, ou encore dans la forêt vierge. En général, le fluide d'un gisement pétrolier comporte du gaz, du pétrole, de l'eau et des particules solides telles du sable.

L'invention s'applique aussi à l'industrie chimique et pétrolière, ou d'une manière générale à toutes les industries employant des fluides polyphasiques.

L'invention s'applique de même au transfert de fluide effectué au moyen d'une pompe centrifuge, hélicoaxiale, ou à vis, ou d'une manière générale aux moyens de pompage dynamique nécessitant pour leur fonctionnement une quantité minimale de liquide pour éviter de désamorcer ces moyens de pompage. On ne sortira pas du cadre de l'invention lorsque les moyens de pompage requièrent pour leur fonctionnement une quantité maximale de liquide (ou minimale de gaz), comme cela peut être le cas pour le transport ou la compression de gaz avec certains compresseurs.

Il est connu d'utiliser une pompe hélicoaxiale pour transférer des fluides comportant du liquide et du gaz, cependant pour avoir un fonctionnement souple ces pompes nécessitent que les proportions de liquide et de gaz ne varient pas brutalement, notamment lors de la venue de bouchons, de gaz ou de liquide.

Dans le brevet FR-2.557.643, on décrit un dispositif permettant d'éviter les variations brutales du rapport volumétrique du gaz au liquide en absorbant lorsqu'elle existe une quantité de gaz trop importante. Le dispositif ne permet cependant pasd'évacuer la quantité de gaz au fur et à mesure de son apparition.

L'invention remédie notamment à cet inconvénient en proposant un dispositif capable d'injecter une quantité progressivement variable de gaz ou de liquide selon les besoins.

La présente invention propose un dispositif et une méthode de pompage d'un fluide circulant dans une conduite et comportant une quantité de gaz et une quantité de liquide. Le dispositif se caractérise notamment en ce qu'il comporte des moyens de mesure des quantités de gaz et de liquide, des moyens de régulation de ces quantités, et des moyens de commande des moyens de régulation en fonction des mesures fournies par les moyens de mesure, des moyens de pompage du fluide disposés en aval des moyens de régulation.

Les moyens de mesure peuvent comprendre un tronçon de conduite dans lequel circule le fluide, et qui comporte un organe adapté à mesurer le poids de fluide dans le tronçon de conduite, la conduite ayant une partie aval disposée en aval du tronçon et ayant une partie amont disposée en amont du tronçon.

L'organe de mesure pourra comporter un premier élément de jonction disposé entre la partie amont de la conduite et une première extrêmité du tronçon, et un deuxième élément de jonction disposé entre la partie aval de la conduite et une deuxième extrêmité dudit tronçon, le premier élément pourra comporter une première zone calibrée et le deuxième élément pourra comporter une deuxième zone calibrée, et le premier et/ou le deuxième éléments pourront comporter un capteur adapté à mesurer les déformations ou les contraintes de la première et/ou deuxième zones calibrées des éléments de jonction, lorsque les quantités de gaz et de liquide varient dans le tronçon.

Le capteur pourra comporter au moins une jauge électrique de déformation. Le capteur pourra être adapté à mesurer une torsion du premier et/ou deuxième éléments de jonction. Le capteur pourra être adapté à mesurer une flexion du premier et/ou du deuxième éléments de jonction.

Les moyens de régulation pourront être adaptés à injecter une quantité supplémentaire de gaz et/ou de liquide dans le fluide.

Le premier et/ou le deuxième éléments de jonction pourront comporter deux brides adaptées à coopérer avec des brides fixées à la première et/ou la deuxième extrêmités du tronçon de conduite, et à une extrêmité de la partie aval et/ou une extrêmité de la partie amont de la conduite, la zone calibrée pourra être disposée entre les deux brides, le capteur étant disposé sur la zone calibrée et noyé dans un liquide protecteur, le liquide protecteur étant contenu sous une membrane souple.

Le tronçon de conduite pourra avoir une forme de boucle.

Les moyens de pompage pourront comporter une pompe dynamique, telle une pompe hélicoaxiale, une pompe à vis, ou une pompe centrifuge. Le dispositif pourra comporter des moyens de prélèvement de liquide ou de gaz disposés en aval desdits moyens de pompage et adaptés à alimenter lesdits moyens de régulation.

La méthode selon l'invention se caractérise notamment en ce qu'on effectue les étapes suivantes :
- on mesure les quantités de gaz et de liquide en mesurant le poids du fluide dans un tronçon de ladite conduite, par mesure des déformations ou des contraintes représentatives du poids du fluide dans ladite conduite,
- on ajoute en fonction des quantités relatives de gaz et de liquide une quantité supplémentaire de gaz ou de liquide avant de pomper le fluide comportant la quantité supplémentaire, et
- après avoir pompé le fluide, on pourra prélever une quantité de gaz ou de liquide servant de quantité supplémentaire d'adjonction.

Le tronçon de conduite ayant la forme d'une boucle, on pourra, pour mesurer le poids de fluide, mesurer des déformations ou des contraintes représentatives du poids du fluide dans la boucle.

On pourra mesurer les déformations ou les contraintes dans une zone calibrée d'un premier et/ou d'un deuxième éléments de jonction disposés respectivement entre une première et/ou une deuxième extrêmités de la boucle, et une première extrêmité d'une partie aval de la conduite et/ou une deuxième extrêmités d'une partie amont de la conduite.

L'invention sera bien comprise et ses avantages apparaîtront clairement à la lecture de quelques exemples de réalisation illustrés par les figures suivantes, parmi lesquelles :
- la figure 1 schématise une configuration générale modulaire du dispositif selon l'invention,
- la figure 2 est un schéma d'une variante du dispositif selon l'invention comportant plusieurs pompes,
- la figure 3 montre en vue de dessus un module comportant des moyens de mesure, selon l'invention, équipé d'une boucle en forme de U,
- la figure 4 montre en vue de dessus une variante du module comportant des moyens de mesure, selon l'invention, équipé d'une boucle en forme d'Oméga,
- la figure 5 représente en détail un élément de jonction comportant un organe de mesure du poids de fluide selon l'invention, et
- la figure 6 indique les positions possibles de jauges électriques de déformation sur un élément de jonction,

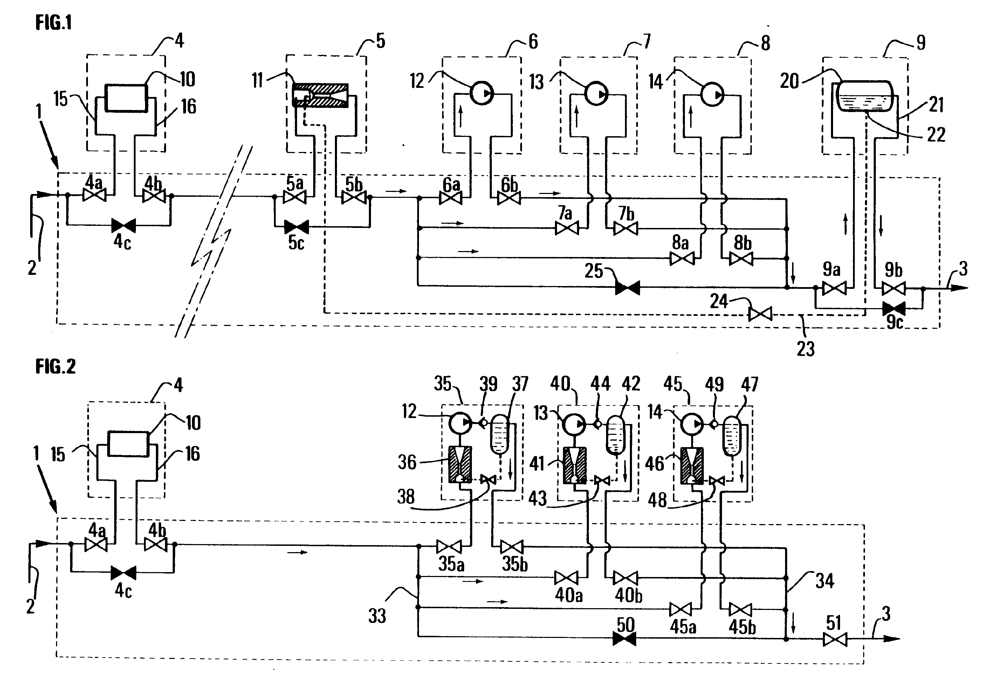

La figure 1 schématise une configuration générale modulaire du dispositif selon l'invention appliquée à la production sous-marine des effluents pétroliers.

Les effluents pétroliers sont amenés vers une embase 1 par une conduite d'arrivée 2 et repartent de cette embase 1 par le conduit de départ 3. L'embase 1 comporte des canalisations de collecte et de distribution des effluents vers différents modules 4 à 9 relevables les uns indépendamment des autres. Le module 4 comporte des moyens de mesure 10 des quantités de liquide et de gaz de l'effluent et est relié en amont au conduit d'arrivée 2. Le module 5 comporte des moyens de régulation 11 des quantités de liquide et de gaz, comportant un mélangeur placé en aval des moyens de mesure 10, et alimenté d'une part par l'effluent et d'autre part par du liquide prélevé en aval des modules de pompage 6, 7, 8.

L'effluent circule dans le mélangeur par un espace annulaire avant d'être complété, par un jet central, avec un supplément de liquide auquel il se mélange sensiblement au niveau d'un col et dans un diffuseur conique divergent. Un tel mélangeur de liquide et de gaz est par exemple décrit dans le brevet français N° 2534 644. Les moyens de régulation sont commandés par les indications fournies par les mesures des quantités de liquide et de gaz de l'effluent données par les moyens 10.

L'effluent complété est conduit vers les moyens de pompage 12, 13, 14 disposés en parallèle. A la sortie de ces moyens de pompage, l'effluent est dirigé vers un réservoir 20 de décantation et de prélèvement d'une partie du liquide de l'effluent, au moyen d'un trop plein 21 voisin du toit du réservoir. Le trop plein 21 de ce réservoir alimente la conduite de sortie 3. Le réservoir 20 comporte un point bas de soutirage 22 en liquide relié par une conduite 23 à une alimentation en liquide supplémentaire du mélangeur des moyens de régulation 11. Chacun des modules 4, 5, 6, 7, 8, 9 peut être isolé de l'embase 1 respectivement par deux vannes 4a à 9a et 4b à 9b et mis en dérivation par les vannes 4c, 5c, 9c éventuellement 25 si les modules 6, 7, 8 sont simultanément isolés, cette vanne 23 permettant de court-circuiter l'ensemble des modules 6, 7 et 8.

La vanne 24 permet en outre d'isoler l'alimentation en liquide supplémentaire du mélangeur provenant du point bas de soutirage 22 du réservoir de décantation 20.

Les flèches représentées le long des canalisations schématisées à la figure 1 indiquent le sens de parcours des différents fluides en circulation dans ces canalisations.

Les moyens de mesure 10 sont connectés à l'embase 1 par une conduite d'amenée 15 et une conduite de retour 16.

La longueur de conduite entre les moyens d'analyse 10 et les moyens de régulation 11 est adaptée aux temps de réponse des moyens de régulation et à la vitesse des effluents dans les différentes conduites de manière à éviter que des bouchons de gaz pénètrent dans les moyens de pompage 12, 13, 14.

Conventionnellement, les vannes représentées noircies sont fermées et les vannes représentées éclaircies sont ouvertes.

La figure 2 représente une variante du mode de réalisation de l'invention illustré à la figure 1 dont la fiabilité est accrue.

L'embase 1 comporte un nombre plus limité de modules relevables. Le module 4 comporte les moyens de mesures pouvant être isolés par deux vannes 4a et 4b ou dérivés par l'ouverture de la vanne 4c. Ces moyens de mesures étant alimentés par le conduit 2 d'arrivée du fluide.

Le fluide ayant traversé les moyens de mesure 10 parvient à un distributeur 33 alimentant trois modules de pompage indépendants 35, 40, 45. Le fluide ayant traversé ces trois modules 35, 40, 45 est rassemblé dans le collecteur 34 débouchant dans la conduite 3 de départ au travers d'une vanne de fermeture 51.

Le distributeur 33 et le collecteur 34 sont reliés entre eux par une conduite de dérivation des modules 35, 40, 45 comportant une vanne 50.

Chacun des modules de pompage indépendants 35, 40, 45 comporte un mélangeur respectivement 36, 41, 46 alimenté principalement par le distributeur 33, et débouchant dans des moyens de pompage respectivement 12, 13, 14. Chacune des sorties de ces pompes est reliée au travers d'un clapet antiretour respectivement 39, 44, 49 à un réservoir de décantation respectivement 37, 42, 47 qui comporte un trop plein raccordé au collecteur 34. Les réservoirs de décantation 37, 42, 47 recueille le liquide supplémentaire servant à alimenter le mélangeur respectivement 36,37, 38 par l'intermédiaire des conduits 38, 43, 48, chacun pourvu d'une vanne d'arrêt.

Suivant ce mode de réalisation avantageux, les informations concernant les quantités de liquide et de gaz fournies par les moyens d'analyse sont traitées par les moyens de régulation qui commande pour chacun des modules de pompage 35, 40, 45 l'injection supplémentaire de liquide dans chacun de leur mélangeur respectif 36, 41, 46. La distance entre les moyens d'analyse et les modules de pompage est adaptée à la vitesse des effluents dans les différentes conduites et aux temps de réponse des moyens de régulation.

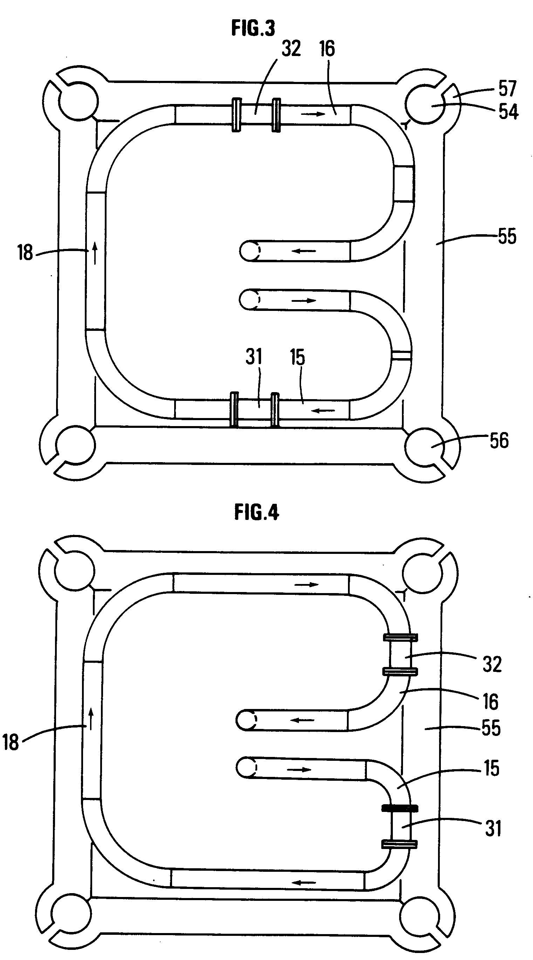

La figure 3 est une vue de dessus du module comportant des moyens de mesure de quantités de liquide et de gaz entrant dans l'embase 1 par la conduite 2. Le module 4 comporte un chassis 55 de forme carrée au quatre coins duquel sont disposés des fourreaux de guidage 56 dont la partie inférieure est équipée d'un entonnoir de centrage 57. Ces fourreaux 56 et ces entonnoirs 57 permettent l'opération de descente du chassis 55 le long de lignes-guides vers des poteaux-guides disposés sur l'embase 1, telle qu'on la pratique couramment pour la descente de module sous-marins sur des embases sous-marines. Lors de l'implantation du module 4 sur l'embase 1, on effectue la connexion des deux parties de la conduite d'amenée 15 et des deux parties de la conduite de retour 16, ces parties de conduites étant solidaires du chassis 55 du module ou de la base 1.

La conduite d'amenée est reliée par un premier élément de jonction 31 à la première extrêmité d'un tronçon de conduite 18 et la deuxième extrêmité du tronçon de conduite 18 est reliée par un deuxième élément de jonction 32 à la conduite de retour 16. Le tronçon de conduite 18 réalise une boucle qui est uniquement fixée aux éléments de jonction 31 et 32 et qui possède un porte à faux. L'intensité des efforts dus à ce porte à faux varie lorsque la composition en liquide et en gaz du fluide change produisant ainsi dans les éléments de jonction 31 et 32 des contraintes et des déformations fonction de la composition du poids de fluide dans la conduite.

La boucle représentée à une forme de U et les déformations que l'on mesure dans les éléments de jonction 31 et 32 sont des déformations de flexion.

La figure 4 représente une variante du module comportant les moyens de mesure utilisant une boucle ayant la forme d'un oméga. Les références numériques des éléments analogues à ceux représentés à la figure 3 ont été conservés.

Selon cette variante, on mesure dans les éléments de jonction 31 et 32 les déformations de torsion, au niveau de ces éléments qui ont des rigidités connues, entre les conduites d'amenée 15 et de retour 16 d'une part et la boucle 18 d'autre part. Ces déformations sont dues au poids de la boucle vide en porte à faux par rapport à ces éléments de jonction 31 et 32 et au poids du fluide présent dans la boucle 18 entre les deux éléments de jonction. Les capteurs de déformation disposés dans les éléments de jonction sont adaptés à mesurer, dans le temps, les différences de poids du fluide dans la boucle, de manière à déterminer les quantités de liquide et de gaz. Pour ce faire on suppose notamment le poids du gaz négligeable devant le poids de liquide.

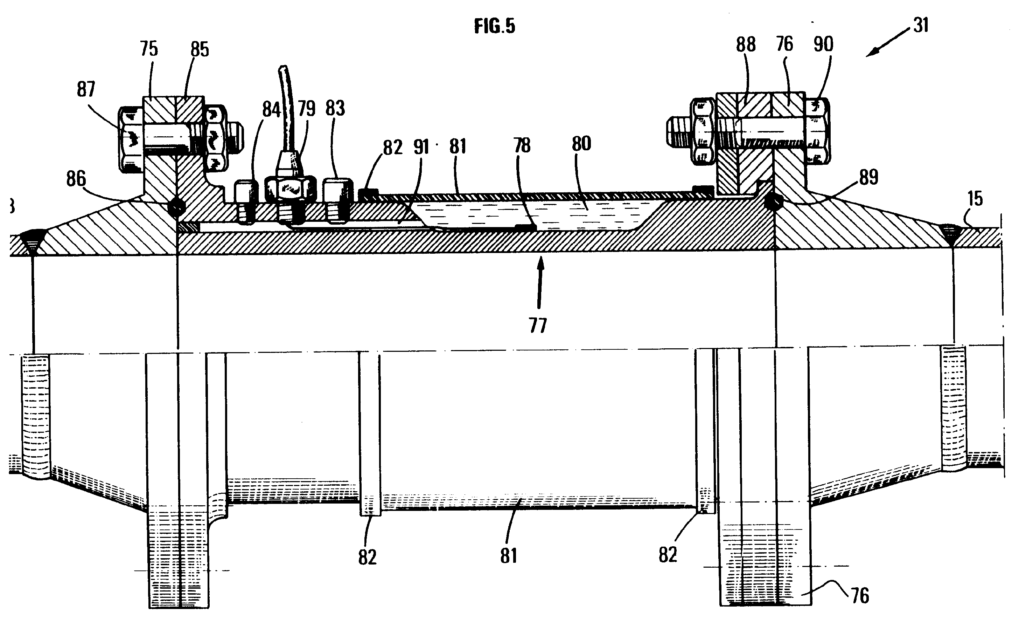

La figure 5 montre en détail l'élément de jonction 31 de la boucle de pesée ou densimétrique du dispositif selon l'invention.

Sur la figure 3, la forme en U de la boucle 18 permet le placement de l'élément de jonction équipé d'un capteur de flexion à chacune des extrêmités de la boucle de manière à mesurer le poids de la masse de fluide dans la boucle.

Sur la figure 4, la forme en Oméga ( Ω ) de la boucle 18 permet le placement de l'élément de jonction équipé d'un capteur de torsion à chacune de ses extrêmités pour mesurer le poids de la masse de fluide dans la boucle.

On aurait très bien pu utiliser d'autres formes de boucle densimétrique et mesurer les déformations ou les contraintes représentatives du poids de la masse de fluide dans la boucle.

On aurait très bien pu aussi mesurer des déformations d'une boucle dont les extrêmités auraient été très rigidement encastrées.

On aurait très bien pu de même mesurer le poids d'une boucle dont les extrêmités auraient été articulées avec suffisamment de souplesse pour détecter les variations de poids liées aux variations de la composition de l'effluent.

Les éléments de jonction 31 et 32 sont disposés à chacune des extrêmités de la boucle 18 qui est maintenue uniquement par ces deux éléments de jonction. L'élément 31 est fixé à la boucle 18 et à la conduite 15 respectivement par deux brides "API" 75 et 76 soudées à la boucle 18 et à la conduite 15.

L'élément 31 comme l'élément 32, comporte dans sa partie centrale une zone calibrée 77 sur laquelle sont disposées des jauges extensométriques 78, placées par exemple à 45° par rapport à l'axe de l'élément 31 lorsque l'on veut mesurer la torsion de l'élément. Ces jauges sont complétées, par des jauges longitudinales mesurant la flexion verticale et la traction de l'élément de jonction, et par des jauges transversales mesurant la pression. L'article R1820 de Jean Avril des Techniques de l'Ingénieur, sur les capteurs extensométriques, décrit les différentes techniques de mesure utilisant les jauges extensométriques électriques. Les jauges sont reliées à une prise électrique immergeable 79, telle une prise fabriquée par Souriau et Compagnie, Jupiter ou Deutsch, fixée sur la paroi de l'élément de jonction, et qui peut être reliée aux instruments de mesure des déformations.

Les jauges 78 sont protégées du milieu extérieur par un fluide isolant 80 disposé à l'intérieur d'une membrane souple 81 faisant étanchéité avec l'élément 31 par un sertissage sur une portée cylindrique de l'élément 21 avec deux colliers 82. Le fluide 80 est introduit sous la membrane 81 grâce à un clapet-bouchon de remplissage 83 et un bouchon de purge 84 fixés sur la paroi de l'élément 31 et relié par un canal 31 de l'espace limité par la zone calibrée 77 et la membrane souple 81.

L'élément 31 comporte d'un côté une bride API 85 coopérant avec la bride 75, un joint métallique 86 du type BX et des boulons 87 pour assurer l'immobilisation et l'étanchéité avec la boucle de mesure 18, et de l'autre côté quatre demi-rondelles montées en quinconce pour constituer une bride tournante 88 qui coopèrent avec un joint métallique 89 du type BX et des boulons 90 pour assurer, sans torsion initiale, l'assemblage et l'étanchéité de l'élément de jonction 31 avec la conduite 15.

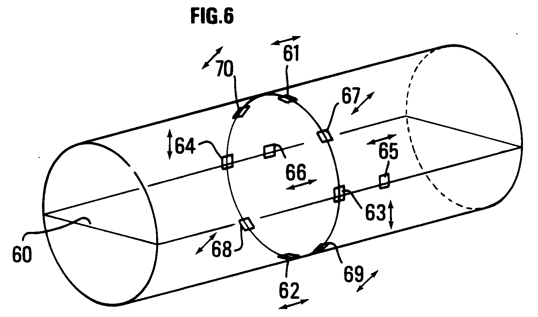

La figure 6 indique les positions possibles des différentes jauges électriques de déformation sur un élément de jonction en fonction des différents types de déformations que l'on désire mesurer.

Le plan 60 étant un plan horizontal de référence, les jauges longitudinales 61 et 62 mesurent les déformations en flexion verticale, l'effort de flexion étant effectué selon une perpendiculaire au plan horizontal 60. Les jauges transversales 63 et 64 mesurent les déformations circonférentielles dues à l'effet de la pression sur la zone calibrée. Les jauges longitudinales 65 et 66 mesurent les déformations longitudinales notamment dues à l'effet de fond de la pression. Les jauges 67, 68, 69, 70 qui sont inclinées à 45 degrés par rapport à l'axe de l'élément de liaison, et qui sont doublées pour la redondance, mesurent la torsion de la zone calibrée de l'élément de liaison.

La direction de mesure des contraintes ou des déformations de chacune des jauges 61 à 70 est indiquée par une double flèche disposée au voisinage de la référence numérique de chacune de ces jauges.

Selon le type de boucle de pesée, on mesure avec le capteur soit la flexion soit la torsion de l'élément de jonction.

On ne sortira pas du cadre de l'invention en disposant autrement les capteurs et/ou en interprètant d'autres contraintes et déformations de l'élément de jonction, les contraintes et déformations étant représentatives de la masse de fluide dans la boucle.

Les informations fournies par les capteurs sont envoyées à un appareil déterminant les différentes contraintes dans les éléments de jonction, notamment les contraintes dues au poids de la masse de fluide dans la boucle, puis par la connaissance de ces contraintes, l'appareil détermine le poids de fluide dans la boucle, puis les quantités de liquide et de gaz dans la boucle.

Les informations relatives aux quantités de liquide et de gaz dans la boucle, sont envoyées à des moyens de commande, qui en fonction, par exemple, d'une programmation préétablie et de ces informations sur le fluide dans la boucle, commande les moyens de régulation pour injecter ou non, voire proportionnellement à l'écart entre la valeur des informations et une ou des valeurs fixées, une quantité de liquide en amont des moyens de pompage.

On pourra seulement commander les moyens de régulation lorsque la quantité de gaz (ou de liquide) aura atteint un seuil déterminé pendant un temps minimum déterminé.

L'analyse dynamique des contraintes ou des déformations, et des régimes de vibrations induit par exemple par une succession de poches de gaz et de bouchons de liquides permet d'identifier le régime ou la structure de l'écoulement dans la boucle de pesée ainsi que leur évolution. En effet, le fluide polyphasique peut être constitué, par exemple, de gouttelettes de liquide en suspension dans le gaz, tel un brouillard, ou de bulles de gaz dans le liquide, ou d'une phase liquide séparée d'une phase gazeuse.

Si l'on considère une répartition symétrique du poids du fluide dans la boucle de pesée, on pourra réaliser les mesures sur un seul élément de jonction.

A titre d'exemple non limitatif on a construit une boucle, comme illustrée à la figure 3, faisant 4,20 m de longueur, d'une section interne de 280 cm² et ayant un volume intérieur de 117,6 dm³.

Comme on a compté 3 secondes comme temps de réponse de la chaîne de mesure, commande et régulation, et que le gaz se déplace à la vitesse moyenne de 7 m/s, il faut 21 mètres minimum de longueur de conduite entre le module comportant les moyens de mesure et le ou les modules de pompage pour mouiller une poche de gaz se déplaçant vers les moyens de pompage et éviter le désamorçage de ces moyens de pompage.

## Revendications

1. Dispositif de pompage d'un fluide circulant dans une conduite (2, 3) et comportant une quantité de gaz et une quantité de liquide, des moyens de mesure (10) desdites quantités de gaz et de liquide, des moyens de régulation (11, 36, 41, 46) desdites quantités de gaz et de liquide, des moyens de commande desdits moyens de régulation en fonction desdites mesures fournies par lesdits moyens de mesure, et des moyens de pompage (12, 13, 14, 37, 42, 47) dudit fluide étant disposés en aval desdits moyens de régulation, caractérisé en ce que lesdits moyens de mesure comportent un tronçon (18) de conduite dans lequel circule ledit fluide, et comportent un organe (31, 32) adapté à mesurer le poids de fluide dans ledit tronçon (18) de conduite, ladite conduite ayant une partie aval disposée en aval dudit tronçon et ayant une partie amont disposée en amont dudit tronçon.

2. Dispositif selon la revendication 1, caractérisé en ce que ledit organe de mesure (10) comporte un premier élément de jonction (31) disposé entre ladite partie amont de la conduite et une première extrêmité du tronçon, et un deuxième élément de jonction (32) disposé entre ladite partie aval de la conduite et une deuxième extrêmité dudit tronçon (18), en ce que ledit premier élément (31) comporte une première zone calibrée (77) et ledit deuxième élément comporte une deuxième zone calibrée, et en ce que ledit premier (31) et/ou ledit deuxième éléments (31) comportent au moins un capteur (78) adapté à mesurer les déformations ou les contraintes de la première et/ou deuxième zones calibrées desdits éléments de jonction lorsque les quantités de gaz et de liquide varient dans ledit tronçon (18).

3. Dispositif selon la revendication 2, caractérisé en ce que ledit capteur comporte au moins une jauge électrique de déformation.

4. Dispositif selon l'une des revendications 2 ou 3, caractérisé en ce que ledit capteur est adapté à mesurer une torsion dudit premier et/ou du deuxième élément de jonction,

5. Dispositif selon l'une des revendications 2 à 4, caractérisé en ce que ledit capteur est adapté à mesurer une flexion dudit premier et/ou du deuxième élément de jonction.

6. Dispositif selon l'une des revendications 1 à 5, caractérisé en ce que lesdits moyens de régulation (11, 36, 41, 46) sont adaptés à injecter une quantité supplémentaire de gaz et/ou de liquide dans ledit fluide.

7. Dispositif selon l'une des revendications 2 à 6, caractérisé en ce que ledit premier (31) et/ou ledit deuxième (32) éléments de jonction comportent deux brides adaptées à coopérer des brides (75, 76) fixées à ladite première et/ou ladite deuxièmes extrêmités du tronçon (18) de conduite, et à une extrêmité de ladite partie avale et/ou une extrêmité de ladite partie amont de la conduite, et en ce que ladite zone calibrée (77) est disposée entre lesdites deux brides, ledit capteur (78) étant disposé sur ladite zone calibrée (77) et noyé dans un liquide protecteur (80), ledit liquide protecteur étant contenu sous une membrane souple (81).

8. Dispositif selon l'une des revendications 1 à 7, caractérisé en ce que ledit tronçon de conduite a une forme de boucle.

9. Dispositif selon l'une des revendications 1 à 7, caractérisé en ce que lesdits moyens de pompage (12, 13, 14) comportent une pompe dynamique, telle une pompe hélicoaxiale, une pompe à vis ou une pompe centrifuge.

10. Dispositif selon l'une des revendications 1 à 9, caractérisé en ce qu'il comporte des moyens de prélèvement de liquide ou de gaz disposés en aval desdits moyens de pompage et adaptés à alimenter lesdits moyens de régulation.

11. Méthode de pompage d'un fluide pétrolier circulant dans une conduite (23), et comportant une quantité de gaz et une quantité de liquide, caractérisée en ce qu'on effectue les étapes suivantes :
- on mesure lesdites quantités de gaz et de liquide en déterminant le poids du fluide par mesure des déformations ou des contraintes du tronçon de ladite conduite.
- on ajoute en fonction des quantités relatives mesurées de gaz et de liquide une quantité supplémentaire de gaz ou de liquide avant de pomper ledit fluide comportant ladite quantité supplémentaire.
- après avoir pompé ledit fluide, on prélève une quantité de gaz ou de liquide servant de quantité supplémentaire d'adjonction.

12. Méthode selon la revendication 11, caractérisée en ce que ledit tronçon de conduite ayant la forme d'une boucle, pour mesurer ledit poids de fluide, on mesure des déformations ou des contraintes de ladite boucle, ces déformations ou ces contraintes étant représentatives du poids du fluide dans ladite boucle.

13. Méthode selon la revendication 12, caractérisée en ce qu'on mesure lesdites déformations ou lesdites contraintes dans une zone calibrée d'un premier et/ou d'un deuxième élément de jonction disposé(s) respectivement entre une première et/ou une deuxième extrêmité de ladite boucle, et une première extrêmité d'une partie aval de ladite conduite et/ou une deuxième extrêmité d'une partie amont de ladite conduite.

14. Méthode selon la revendication 11, caractérisée en ce qu'on ajoute la quantité supplémentaire de gaz ou de liquide une fois seulement que les quantités de gaz et de liquide du fluide ont atteint un seuil déterminé pendant un temps déterminé.

## Patentansprüche

1. Vorrichtung zum Pumpen eines Fluids, das in einer Leitung (2, 3) fließt und eine Menge an Gas und eine Menge an Flüssigkeit umfaßt, Mitteln zum Messen (10) dieser Mengen an Gas und Flüssigkeit, Mitteln zum Steuern (11, 36, 41, 46) dieser Mengen an Gas und Flüssigkeit, Mitteln zum Betätigen dieser Steuermittel als Funktion dieser durch diese Meßmittel gelieferten Meßwerte und Mitteln zum Pumpen (12, 13, 14, 37, 42, 47) dieses Fluids, die hinter diesen Steuermitteln angeordnet sind, dadurch gekennzeichnet, daß diese Meßmittel einen Leitungsabschnitt (18), in welchem dieses Fluid zirkuliert, umfassen, und ein Organ (31, 32) umfassen, das so ausgebildet ist, um das Gewicht des Fluids in diesem Leitungsabschnitt (18) zu messen, wobei diese Leitung über einen hinteren hinter diesem Abschnitt angeordneten Teil und einen vorderen vor diesem Abschnitt angeordneten Teil verfügt.

2. Vorrichtung nach Anspruch 1, dadurch gekennzeichnet, daß dieses Meßorgan (10) ein erstes Verbindungselement (31) umfaßt, das zwischen diesem vorderen Teil der Leitung und einem ersten Teilende des Abschnitts angeordnet ist, sowie über ein zweites Verbindungselement (32) verfügt, das zwischen diesem hinteren Leitungsteil und einem zweiten Abschnitt (18) angeordnet ist, daß dieses erste Element (31) eine erste kalibrierte Zone (77) umfaßt und daß dieses zweite Element eine zweite kalibrierte Zone umfaßt und daß dieses erste (31) und/oder dieses zweite Element (31) wenigstens einen Meßfühler (78) umfassen, der so ausgebildet ist, daß er die Verformungen oder die Belastungen der ersten und/oder zweiten kalibrierten Zone dieser Verbindungselemente mißt, wenn die Mengen an Gas und Flüssigkeit in diesem Abschnitt (18) variieren.

3. Vorrichtung nach Anspruch 2, dadurch gekennzeichnet, daß dieser Meßfühler wenigstens einen elektrischen Verformungsmeßstreifen umfaßt.

4. Vorrichtung nach einem der Ansprüche 2 oder 3, dadurch gekennzeichnet, daß dieser Meßfühler so ausgebildet ist, daß er eine Torsion dieses ersten und/oder des zweiten Verbindungselements mißt.

5. Vorrichtung nach einem der Ansprüche 2 bis 4, dadurch gekennzeichnet, daß dieser Meßfühler so ausgebildet ist, daß er eine Durchbiegung dieses ersten und/oder dieses zweiten Verbindungselements mißt.

6. Vorrichtung nach einem der Ansprüche 1 bis 5, dadurch gekennzeichnet, daß diese Steuermittel (11, 36, 41, 46) so ausgebildet sind, daß sie eine zusätzliche Menge an Gas und/oder Flüssigkeit in dieses Fluid injizieren.

7. Vorrichtung nach einem der Ansprüche 2 bis 6, dadurch gekennzeichnet, daß dieses erste (31) und/oder zweite (32) Verbindungselement zwei Flansche umfassen, die so ausgebildet sind, daß sie mit Flanschen (75, 76) zusammenwirken, die an diesem ersten und/oder diesem zweiten Ende des Leitungsabschnitts (18) und an einem Ende dieses hinteren Teils und/oder einem Ende dieses vorderen Teils der Leitung befestigt sind und daß diese kalibrierte Zone (77) zwischen diesen beiden Flanschen angeordnet ist, wobei dieser Meßfühler (78) auf dieser kalibrierten Zone (77) angeordnet ist und in diese Schutzflüssigkeit (80) taucht, wobei diese Schutzflüssigkeit unter einer nachgiebigen Membran (81) enthalten ist.

8. Vorrichtung nach einem der Ansprüche 1 bis 7, dadurch gekennzeichnet, daß dieser Leitungsabschnitt die Form einer Schleife hat.

9. Vorrichtung nach einem der Ansprüche 1 bis 7, dadurch gekennzeichnet, daß diese Pumpmittel (12, 13, 14) eine dynamische Pumpe, beispielsweise eine helikoaxiale Pumpe, eine Schraubenpumpe oder eine Zentrifugalpumpe umfassen.

10. Vorrichtung nach einem der Ansprüche 1 bis 9, dadurch gekennzeichnet, daß sie Mittel zur Entnahme von Flüssigkeit oder Gas umfaßt, die hinter diesen Pumpmitteln angeordnet und so ausgebildet sind, daß sie diese Steuermittel speisen.

11. Verfahren zum Pumpen eines in einer Leitung (23) fließenden Erdölfluids, das auch eine Menge an Gas und eine Menge an Flüssigkeit umfaßt, dadurch gekennzeichnet, daß man die folgenden Stufen durchführt:
- man mißt diese Mengen an Gas und Flüssigkeit, indem man das Gewicht des Fluids durch Messen der Verformungen oder Beanspruchungen dieses Abschnitts dieser Leitung bestimmt.
- Man als Funktion der relativen gemessenen Mengen an Gas und Flüssigkeit eine zusätzliche Menge an Gas oder Flüssigkeit hinzufügt, bevor dieses diese zusätzliche Menge umfassende Fluid gepumpt wird.
- Und nachdem man dieses Fluid gepumpt hat, entnimmt man eine Menge an Gas oder Flüssigkeit, das als zusätzliche Zusatzmenge dient.

12. Verfahren nach Anspruch 11, dadurch gekennzeichnet, daß, da der Leitungsabschnitt die Form einer Schleife hat, mißt man zum Messen dieses Fluidgewichts Verformungen oder Beanspruchungen dieser Schleife, wobei diese Verformungen oder diese Beanspruchungen repräsentativ für das Gewicht des Fluids in dieser Schleife sind.

13. Verfahren nach Anspruch 12, dadurch gekennzeichnet, daß man diese Verformungen oder diese Beanspruchungen in einer kalibrierten Zone eines ersten und/oder eines zweiten Verbindungselements mißt, das oder die jeweils zwischen einem ersten und/oder einem zweiten Ende dieser Schleife und einem ersten Ende eines hinteren Teils dieser Leitung und/oder einem zweiten Ende eines vorderen Teils dieser Leitung angeordnet ist (sind).

14. Verfahren nach Anspruch 11, dadurch gekennzeichnet, daß man die zusätzliche Menge an Gas oder Flüssigkeit einmal zugibt, wenn die Mengen an Gas und Flüssigkeit des Fluids einen bestimmten Schwellenwert während einer bestimmten Zeit erreicht haben.

## Claims

1. Device for pumping a fluid circulating in a pipe (2, 3) and having a quantity of gas and a quantity of liquid, means (10) for measuring the quantities of gas and liquid, means for controlling (11, 36, 41, 46) the quantities of gas and liquid, means for controlling the regulating means on the basis of the measurements provided by the measuring means, and means for pumping (12, 13, 14, 37, 42, 47) the fluid located downstream of the regulating means, characterised in that the measuring means comprise a section (18) of pipe in which the fluid circulates and have an element (31, 32) designed to measure the weight of the fluid in the section (18) of pipe, the pipe having a downstream part located downstream of the section and an upstream part located upstream of the section.

2. Device in accordance with claim 1, characterised in that the measuring means (10) has a first connecting element (31) located between the upstream part of the pipe and a first end of the section and a second connecting element (32) located between the downstream part of the pipe and a second end of the section (18), in that the first element (31) has a first calibrated zone (77) and the second element has a second calibrated zone, in that the first (31) and/or second element(s) (32) have at least one sensor (78) designed to measure strain and stress in the first and/or second calibrated zone(s) of the connecting elements when the quantities of gas and liquid vary in the section (18).

3. Device in accordance with claim 2, characterised in that the sensor has at least one electric stress gauge.

4. Device in accordance with one of claims 2 or 3, characterised in that the sensor is designed to measure twisting in the first and/or second connecting element(s).

5. Device in accordance with one of claims 2 to 4, characterised in that the sensor is designed to measure flexion of the first and/or second connecting element(s).

6. Device in accordance with one of claims 1 to 5, characterised in that the regulating means (11, 36, 41, 46) are adapted to inject an additional quantity of gas and/or liquid into the fluid.

7. Device in accordance with one of claims 2 to 6, characterised in that the first (31) and/or the second (32) connecting element(s) have flanges designed to co-operate with flanges (75, 76) attached to the first and/or second end(s) of the section (18) of the pipe and at one end of the downstream part and/or one end of the upstream part of the pipe, and in that the calibrated zone (77) is located between the two flanges, the sensor (78) being located in the calibrated zone (77) and immersed in a protective liquid (80), the protective liquid being contained under a flexible membrane (81).

8. Device in accordance with one of claims 1 to 7, characterised in that the section of pipe has a loop shape.

9. Device in accordance with one of claims 1 to 7, characterised in that the pumping means (12, 13, 14) have a dynamic pump, such as an axial-flow pump, a screw pump or a centrifugal pump.

10. Device in accordance with one of claims 1 to 9, characterised in that it comprises means for sampling liquid or gas located downstream of the pumping means and is designed to supply the regulating means.

11. Method of pumping a petroleum fluid circulating in a pipe (23) and having a quantity of gas and a quantity of liquid, characterised in that the following stages are carried out:
- the quantities of gas and liquid are measured by determining the weight of the fluid by measuring stress and strain on the section of the pipe.
- depending on the relative quantities of gas and liquid measured, an additional quantity of gas or liquid is added before pumping the fluid containing the additional quantity.
- when the fluid has been pumped, a quantity of gas or liquid serving as the additional quantity is sampled.

12. Method in accordance with claim 11, characterised in that, in order to measure the fluid, given that the section of pipe is loop-shaped, the stress and strain on the loop are measured, these stresses or strains being representative of the weight of the fluid in the loop.

13. Method in accordance with claim 12, characterised in that measurements are taken of the stress and strains in a calibrated zone of a first and/or second connecting element located respectively between a first and/or a second end of the loop, and a first end of a downstream part of the pipe and/or a second end of an upstream part of the pipe.

14. Method in accordance with claim 11, characterised in that the additional quantity of gas or liquid is added only when the quantities of gas and liquid in the fluid have reached given threshold over a given period of time.
